# EUROPEAN PATENT APPLICATION

(11) **EP 4 730 630 A1**
(43) Date of publication of application: **22.04.2026**
(21) Application number: 24209835.8
(22) Date of filing: 30.10.2024
(51) Int. Cl.: H02M 1/12, H02M 7/487, H02M 1/00, H02M 7/483, H02M 7/49

(54) **POWER CONVERTERS WITH CASCADED INVERTER SUBMODULES AND COMMON MODE LOOP**

(30) Priority: 18.10.2024 EP 24207570
(71) Applicant: Volvo Penta Corporation, 405 08 Göteborg (SE)
(72) Inventor: Kersten, Anton, 433 42 Partille (SE)
(74) Representative: Valea AB

(57) **Abstract**

A power converter (300) with a common mode loop is provided. The power converter (300) comprises a multiple phases inverter (310). Each phase inverter comprises a number n of inverter submodules (SM1, SM2, ... SMn) cascaded. Inputs of the first inverter submodules (SM1) in each phase inverter are connected together to form a neutral termina (N) of the multiple phases inverter (310). The power converter (300) further comprises a multiple phases filter (320) having a neutral terminal (N_{F}). A common mode loop is formed in the power converter (300) by a connection (340) between the neutral terminal (N_{F}) of the multiple phases filter (320) and the neutral terminal (N) of the multiple phases inverter (310).

## Description

### TECHNICAL FIELD

The disclosure relates generally to power electronics. In particular aspects, the disclosure relates to power converters with cascaded inverter submodules and common mode loop. The disclosure can be applied to any power system and vehicles using an electrical energy storage system, such as heavy-duty vehicles, e.g. trucks, buses, and construction equipment, among other vehicle types. Although the disclosure may be described with respect to a particular vehicle, the disclosure is not restricted to any particular vehicle.

### BACKGROUND

In an electrical energy storage system (EES), power conversion system comprising one or more power electronic stages, e.g. direct current to direct current (DC/DC) converters, direct current to alternating current (DC/AC) inverters, alternating current to direct current (AC/DC) inverters, are used to handle bidirectional flow of power, allowing for both charging from a power system or energy sources, e.g. traditional grid, renewable energy sources, motors etc., to the ESS and discharging from the ESS to the power system. A bidirectional AC/DC converter is typically connected via a transformer to the power system. A transformer blocks common mode currents, but it is bulky and expensive. A direct connection of the AC/DC converter to the power system is possible, but the resulting common mode voltages can be dangerous for humans or otherwise a residual current device, i.e. Ground Fault Circuit Interrupter (GFCI) in the power conversion system, is very susceptible to the common mode current and cannot work properly.

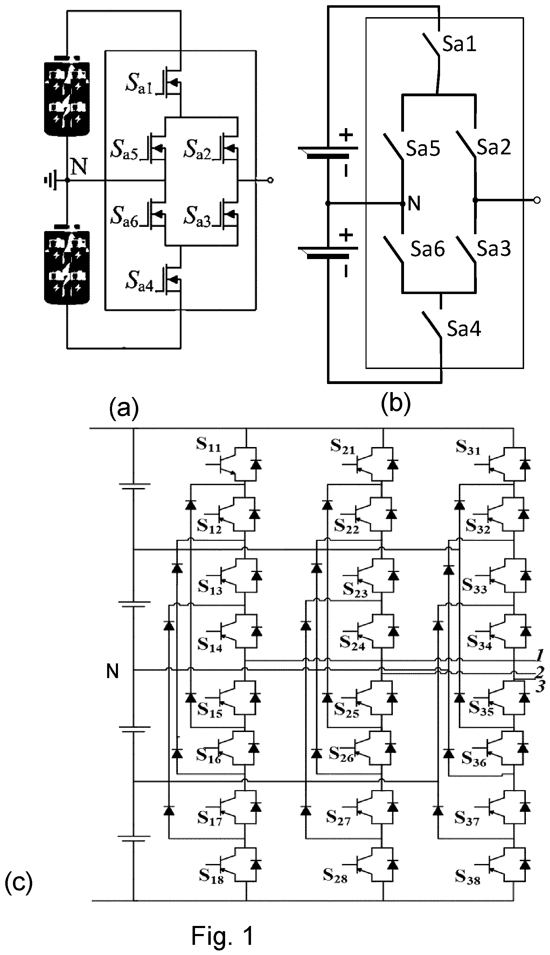

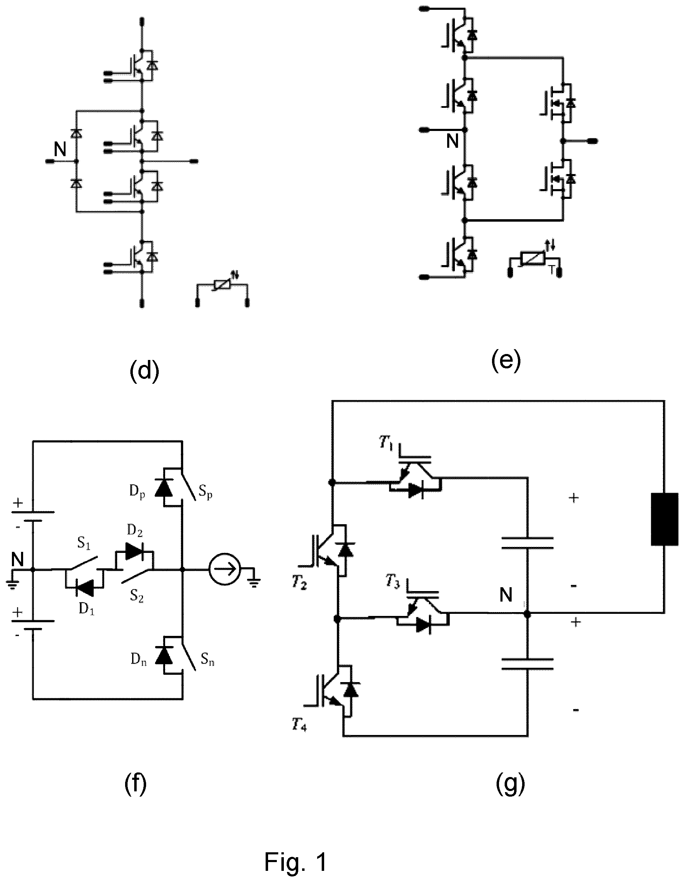

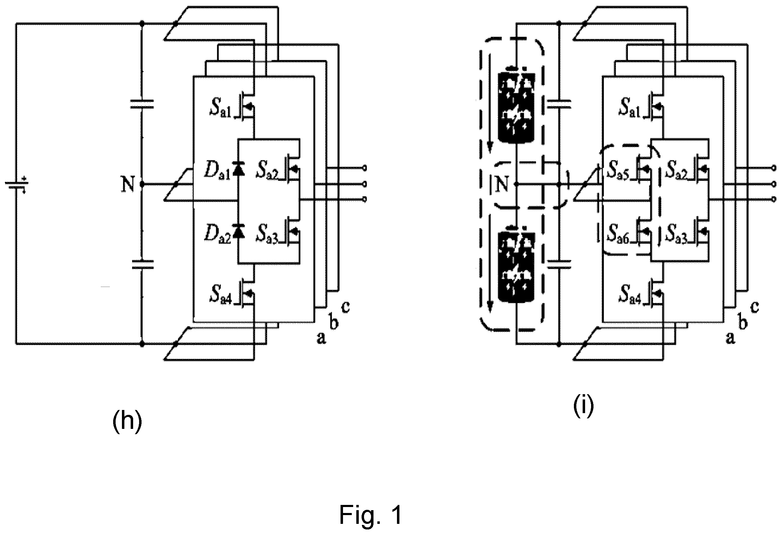

Multilevel Neutral Point Clamped (NPC) inverters are usually used in bidirectional AC/DC converters in electrical systems, particularly in applications such as renewable energy systems, motor drives, and high-voltage direct current (HVDC) transmission systems. NPC inverter is a type of multilevel power inverter known for its ability to produce high-quality output voltage with reduced total harmonic distortion (THD) and lower switching losses compared to conventional two-level inverters. The NPC inverter achieves these benefits through its unique topology, which includes multiple power semiconductor switches implemented by e.g. Insulated Gate Bipolar Transistors (IGBTs) or Metal-Oxide-Semiconductor Field-Effect Transistors (MOSFETs), arranged in such a way that they can generate several voltage levels across a load. **Figs. 1 (a)-(i)** are schematic block diagrams showing different types of NPC inverters, where **(a)** is a 3-level NPC inverter implemented by MOSFETs, **(b)** is a 3-level NPC inverter implemented by switches, **(c)** is a 3-phase 5-level NPC inverter implemented by IGBTs, **(d)** is an I-type NPC inverter, **(e)** is an active I-type NPC inverter, **(f)** is a T-type NPC inverter, **(g)** is an F type NPC inverter, **(h)** is a 3-phase 3-level NPC inverter with single battery, and **(i)** is a 3-phase 3-level NPC inverter with dual batteries. The key feature of the NPC inverter is its ability to achieve multiple voltage levels across the load by clamping the midpoint of DC bus to a neutral point "**N**" as indicated in Figs. 1(a)-(i).

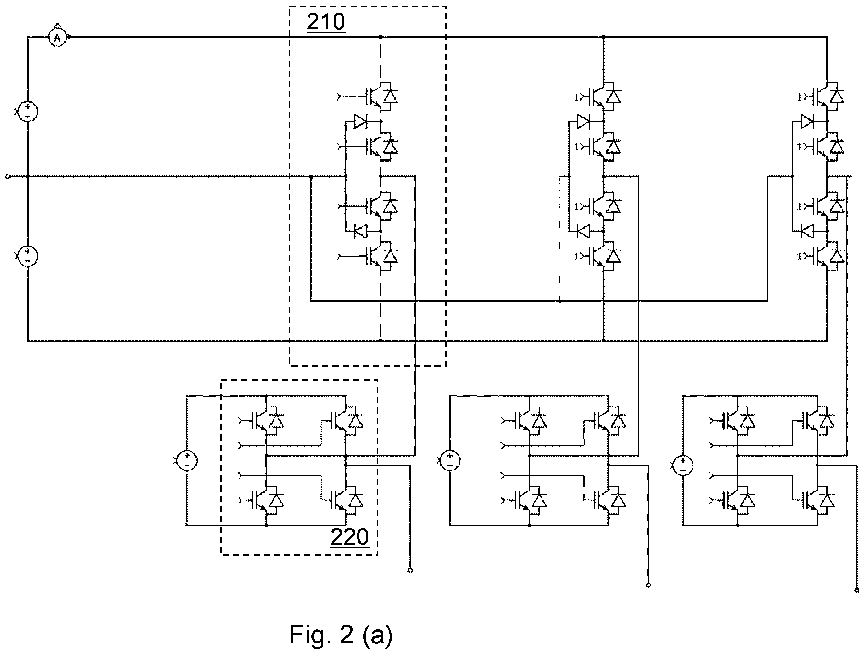

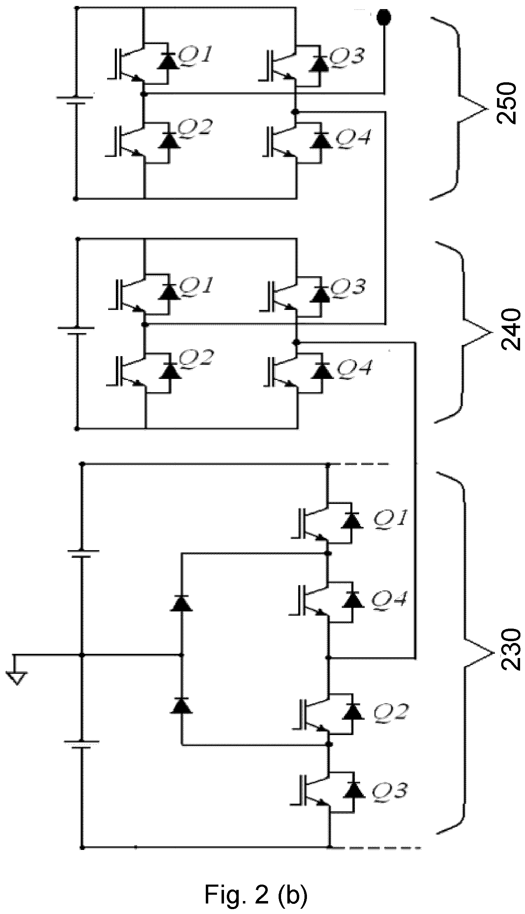

An inverter may comprise two or more different types of inverters cascaded. For example, **Fig.2(a)** shows a 3-phase inverter where each phase inverter comprises a 3-level NPC inverter **210** cascaded with a H-bridge inverter **220.** **Fig. 2(b)** shows an inverter comprising a 3-level NPC inverter **230** cascaded with two H-bridge inverters **240, 250.**

To connect different types of cascaded inverters to the power system without introducing common mode voltages is an important issue.

### SUMMARY

According to a first aspect of the disclosure, a power converter with a common mode loop is provided. The power converter comprises a multiple phases inverter. Each phase inverter comprises a number n of inverter submodules cascaded. Inputs of the first inverter submodules in each phase inverter are connected together to form a neutral terminal of the multiple phases inverter. The power converter further comprises a multiple phases filter having a neutral terminal. Output terminals of each phase inverter are connected to respective input terminals of the multiple phases filter, output terminals of the multiple phases filter are connected to a power system. A common mode loop is formed in the power converter by a connection between the neutral terminal of the multiple phases filter and the neutral terminal of the multiple phases inverter.

The first aspect of the disclosure may seek to reduce common mode voltages when connecting the power converter directly to a power system so that safety of the power converter is improved, and malfunction of the power converter is reduced. A technical benefit may include providing a common mode loop in the power converter to sink the common mode currents, thus the safety of the power converter for humans handling the power converter is improved and the malfunction of the power converter is reduced. Compared to other methods, the system power density and efficiency is increased.

Optionally in some examples, including in at least one preferred example, the multiple phases inverter may be a 3-phase inverter, and the multiple phases filter may be a 3-phase filter. A technical benefit may include providing a 3-phase power converter with reduced common mode currents to a power system operating with 3-phase AC.

Optionally in some examples, including in at least one preferred example, the common loop connection may be implemented by a cable or an impedance component. The cable or impedance component may connect the neutral terminal of the multiple phases filter and the neutral terminal of the multiple phases inverter directly or via a switch. A technical benefit may include providing a common mode loop in the power converter with less bulky and expensive components.

Optionally in some examples, including in at least one preferred example, the multiple phases filter may be at least one of a multiple phases inductor-capacitor-inductor (LCL) filter, a multiple phases inductor-inductor-capacitor-inductor (LLCL) filter, a multiple phases cascaded LCL filterand a multiple phases cascaded LLCL filter. A technical benefit may include providing different types of filters for different applications and filtering requirements.

Optionally in some examples, including in at least one preferred example, the number n of inverter submodules may be cascaded in single terminal connection or in double-terminal connection. A technical benefit may include providing flexible cascaded connections depending on different applications, structures, input and output terminals of the inverter submodules.

Optionally in some examples, including in at least one preferred example, the number n of cascaded inverter submodules may comprise at least one or more of NPC inverters, H-bridge inverters, double-H bridge inverters and semi-H bridge inverters. A technical benefit may include providing an inverter with different types of inverters cascaded depending on different applications and the structures and connections of the inverter submodules.

Optionally in some examples, including in at least one preferred example, the number n of the cascaded inverter submodules may comprise at least one NPC inverters cascaded with at least one of: one or more H-bridge inverters, one or more semi-H bridge inverters, one or more double H-bridge inverters. A technical benefit may include providing a hybrid inverter which has the advantages of both NPC inverter and H bridge inverter depending on different applications.

Optionally in some examples, including in at least one preferred example, each of the number n of cascaded inverter submodules may be an NPC inverter.

Optionally in some examples, including in at least one preferred example, the first inverter submodule in each phase converter may be an NPC inverter, and at least one of the rests of inverter submodules may be a H-bridge inverter, a semi-H bridge inverter, or a double-H bridge inverter.

Optionally in some examples, including in at least one preferred example, the NPC inverter may be at least one of a multi-level NPC inverter, an I-type NPC inverter, an active I-type NPC inverter, a T-type NPC inverter, an F-type NPC inverter, and a multi-level version of I-type, active I-type, T-type, F-type NPC inverter. A technical benefit may include providing a common mode loop for the power converter with different types of NPC inverters to reduce common mode voltages, improve the safety for humans handling the power converter and reduce the malfunction of the power converter.

Optionally in some examples, including in at least one preferred example, each of the number n of cascaded inverter submodules may be an H-bridge inverter, or a semi-H bridge inverter, or a double H-bridge inverter.

Optionally in some examples, including in at least one preferred example, the number n of cascaded inverter submodules may comprise at least one semi-H bridge inverters cascaded with one or more double H-bridge inverters.

Optionally in some examples, including in at least one preferred example, the power converter may be any one of a Voltage Source Converter, a High Voltage Direct Current converter, a Direct Current to Direct Current converter, a Direct Current to Alternating Current converter, an Alternating Current to Direct Current converter. A technical benefit may include providing a common mode loop connection for different types of power converters to reduce common mode voltages, improve safety for humans handling the power converter and reduce malfunction of the different power converter converters.

Optionally in some examples, including in at least one preferred example, the power converter may be implemented in a renewable energy system, a motor drive system, a high-voltage direct current transmission system, or a battery energy storage system. A technical benefit may include providing a power converter with a common mode loop for different applications to reduce common mode voltages, improve the safety for humans handling the power converter and reduce malfunction of the power converter.

According to a second aspect of the disclosure, a vehicle comprises a power converter of the first aspect is provided. The power converter may be implemented in a motor drive system of the vehicle. The second aspect of the disclosure may seek to provide a vehicle comprising a power converter with improved performance and safety. A technical benefit may include providing a power converter with a common mode loop to the vehicle to reduce common mode voltages, improve safety for humans handling the power converter and reduce malfunction of the power converter.

According to a third aspect of the disclosure, a method for forming a common mode loop in the power converter described above is provided. The method comprises forming a common mode loop in the power converter by providing a connection between the neutral terminal of the multiple phases filter and the neutral terminal of the multiple phases inverter.

The third aspect of the disclosure may seek to reduce common mode voltages when connecting the power converter directly to a power system so that safety of the power converter is improved, and malfunction of the power converter is reduced. A technical benefit may include providing a common mode loop in the power converter to sink the common mode currents, thus the safety of the power converter for humans handling the power converter is improved and the malfunction of the power converter is reduced.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIGs. 1 (a)-(i)** are exemplary NPC inverters according to some examples.
**FIG. 2 (a)-(b)** are exemplary power converters with cascaded inverter submodules according to some examples.
**FIG. 3** is an exemplary power converter with a common mode loop according to an example.
**FIG. 4** (a)-(b) are exemplary inverter submodules according to some examples.
**FIG. 5** is an exemplary power converter with a common mode loop according to an example.
**FIG. 6 (a)-(b)** are exemplary inverter submodules according to some examples.
**FIG. 7** (a)-(b) are exemplary power converters according to some examples.
**FIG. 8** (a)-(c) are exemplary multiple phases filters.
**FIG. 9** is a flow chart showing a method for forming a common mode loop for a power converter according to an example.
**FIG. 10** is an exemplary vehicle comprising a power converter according to an example.

### DETAILED DESCRIPTION

The detailed description set forth below provides information and examples of the disclosed technology with sufficient detail to enable those skilled in the art to practice the disclosure.

As discussed in the background and shown in Fig. 2 (a) and (b), an inverter may comprise two or more different types of inverters cascaded. The different types of cascaded inverters are referred to as Inverter Submodules (SMs) hereafter. For the examples shown in Fig. 2 (a) and (b), the 3-level NPC inverter 210, 230 is a type of inverter submodule (SM), the H-bridge inverter 220, 240, 250 is a type of inverter submodule (SM).

A power converter may comprise an inverter with different types of inverter submodules cascaded. To reduce common mode voltages and sink common mode currents caused by connecting the power converter directly to a power system, a common mode loop is formed for the power converter. In this way, the safety for humans handling the power converter is improved and the malfunction of the power converter is reduced.

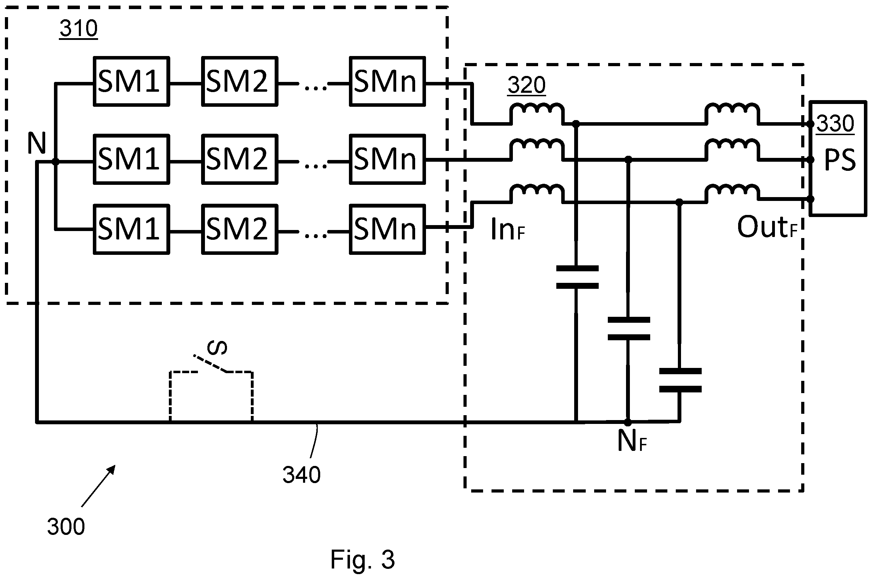

**Fig. 3** is an exemplary power converter **300** with a common mode loop according to an example. The power converter 300 comprises a multiple phases inverter **310,** e.g. a 3-phase inverter. Each phase inverter comprises a number n of inverter submodules **SM1, SM2, ...SMn** cascaded, where n is a positive integer. Inputs of the first inverter submodules SM1 in each phase inverter are connected together to form a neutral terminal **N** of the multiple phases inverter 310.

The power converter 300 further comprises a multiple phases filter **320,** e.g. a 3-phase filter, having a neutral terminal **N_{F}.** Output terminals of each phase inverter are connected to respective input terminals **In_{F}** of the multiple phases filter 320. There are 3 output terminals if the multiple phases inverter 310 is a 3 phases inverter, and there are 3 input terminals if the multiple phases filter 320 is a 3 phases filter. Output terminals **OutF** of the multiple phases filter 320 are connected to a power system **330.** A common mode loop is formed in the power converter 300 by providing a connection **340** between the neutral terminal N_{F} of the multiple phases filter 320 and the neutral terminal N of the multiple phases inverter 310.

The connection 340 may be implemented by a cable or an impedance component. The cable or impedance component may connect the neutral terminal N_{F} of the multiple phases filter 320 and the neutral terminal N of the multiple phases inverter 310 directly or via a switch S as indicated by the dotted line.

Depending on different applications, structures, input and output terminals of the inverter submodules, the number n of inverter submodules SM1, SM2, ... SMn may be cascaded in single terminal connection or in double-terminal connection. That is to provide flexible cascaded connections.

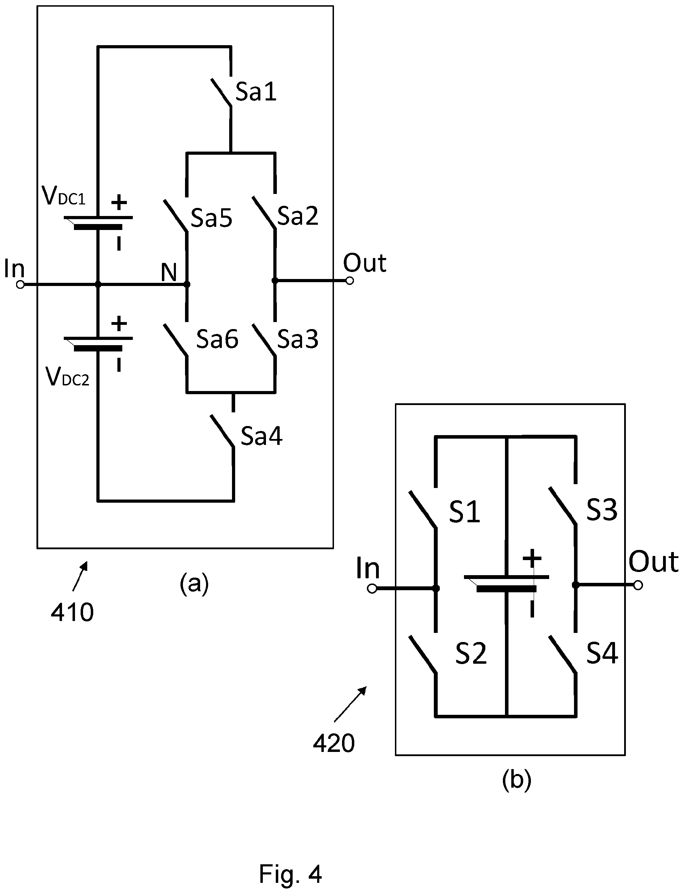

As shown in Fig. 3, the number n of inverter submodules SM1, SM2, ... SMn are cascaded in single terminal connection. That is the connection between any two of the inverter submodules is a single terminal connection, i.e. each inverter submodule is a single-input-single-output inverter. **Fig. 4 (a)** and **(b)** show some exemplary inverter submodules with single-input-single-output, where (a) is a 3-level NPC inverter **410** and (b) is a H-bridge inverter **420.**

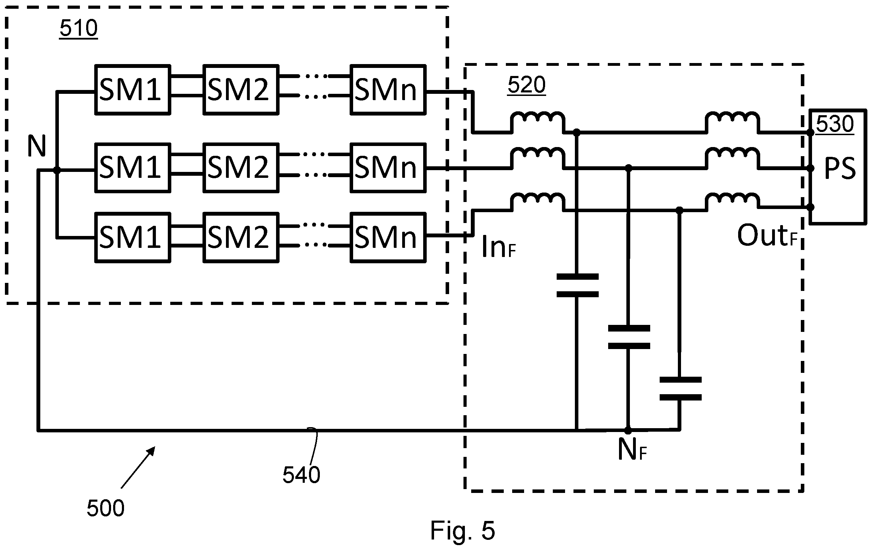

The number n of inverter submodules SM1, SM2, ... SMn may be cascaded in double-terminal connection. **Fig. 5** is an exemplary power converter **500** with a common mode loop according to an example. The power converter 500 comprises a multiple phases inverter **510,** e.g. a 3-phase inverter. Each phase inverter comprises a number n of inverter submodules **SM1, SM2, ...SMn** cascaded. Inputs of the first inverter submodules SM1 in each phase inverter are connected together to form a neutral terminal **N** of the multiple phases inverter 510.

The power converter 500 further comprises a multiple phases filter **520,** e.g. a 3-phase filter, having a neutral terminal **N_{F}.** Output terminals of each phase inverter are connected to respective input terminals **In_{F}** of the multiple phases filter 520. Output terminals **OutF** of the multiple phases filter 520 are connected to a power system **530.** A common mode loop is formed in the power converter 500 by providing a connection **540** between the neutral terminal N_{F} of the multiple phases filter 520 and the neutral terminal N of the multiple phases inverter 510.

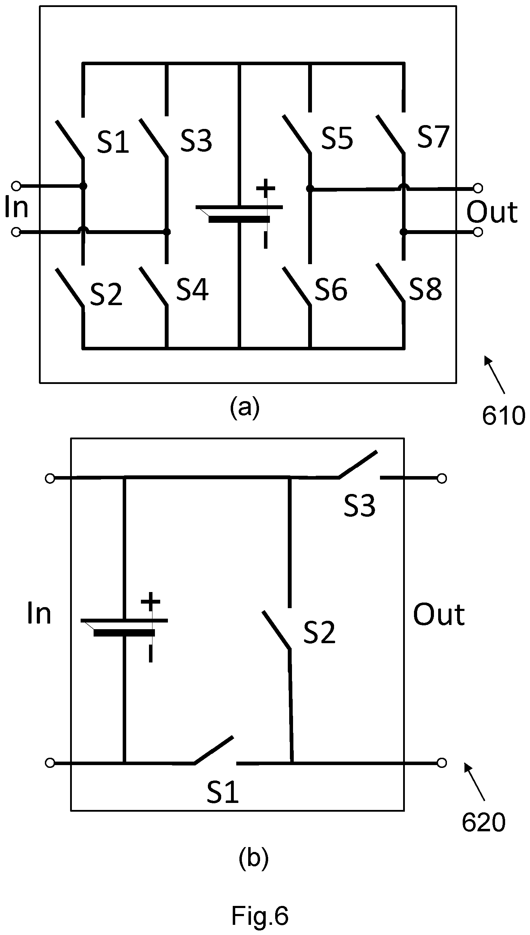

The connection between any two of the inverter submodules is a double-terminal connection, i.e. each inverter submodule is a double-input-double-output inverter. **Fig. 6 (a)** and **(b)** show some exemplary inverter submodules with double-input-double-output, where (a) is a double-H bridge inverter **610** and (b) is a semi-H bridge inverter **620.**

The cascaded inverter submodules SM1, SM2, ... SMn may comprise any types of inverters depending on applications, e.g. any types of NPC inverters shown in Fig. 1 (a) to (g), such as multi-level NPC inverters, I-type NPC inverters, active I-type NPC inverters, T-type NPC inverters, F-type NPC inverters, and multilevel versions of I-type, active I-type, T-type, F-type NPC inverters, or any types of H-bridge (HB) inverters, e.g. double-H bridge inverters, semi-H bridge inverters. The number n of the cascaded inverter submodules SM1, SM2, ... SMn may be cascaded in any suitable order.

According to some examples, at least one of the number n of the cascaded inverter submodules SM1, SM2, ... SMn may be an NPC inverter 410, or an H-bridge (HB) inverter 420, or a double-H bridge inverter 610, or a semi-H bridge inverter 620.

According to some examples, each of the number n of the cascaded inverter submodules SM1, SM2, ... SMn may be an NPC inverter 410.

According to some examples, each of the number n of the cascaded inverter submodules SM1, SM2, ... SMn may be a H-bridge inverter 420, or a semi-H bridge inverter 620, or a double H-bridge inverter 610.

According to some examples, the number n of the cascaded inverter submodules SM1, SM2, ... SMn may comprise one or more NPC inverters cascaded with any one or more of H-bridge (HB) inverters, semi-H bridge inverters, double H-bridge inverters.

According to some examples, the first inverter submodule SM1 in each phase inverter may be an NPC inverter, and at least one of the rests of inverter submodules SM2, ... SMn may be a H-bridge inverter, a semi-H bridge inverter, or a double-H bridge inverter.

According to some examples, the number n of the cascaded inverter submodules SM1, SM2, ... SMn may comprise one or more semi-H bridge inverters 620 cascaded with one or more double H-bridge inverters 610.

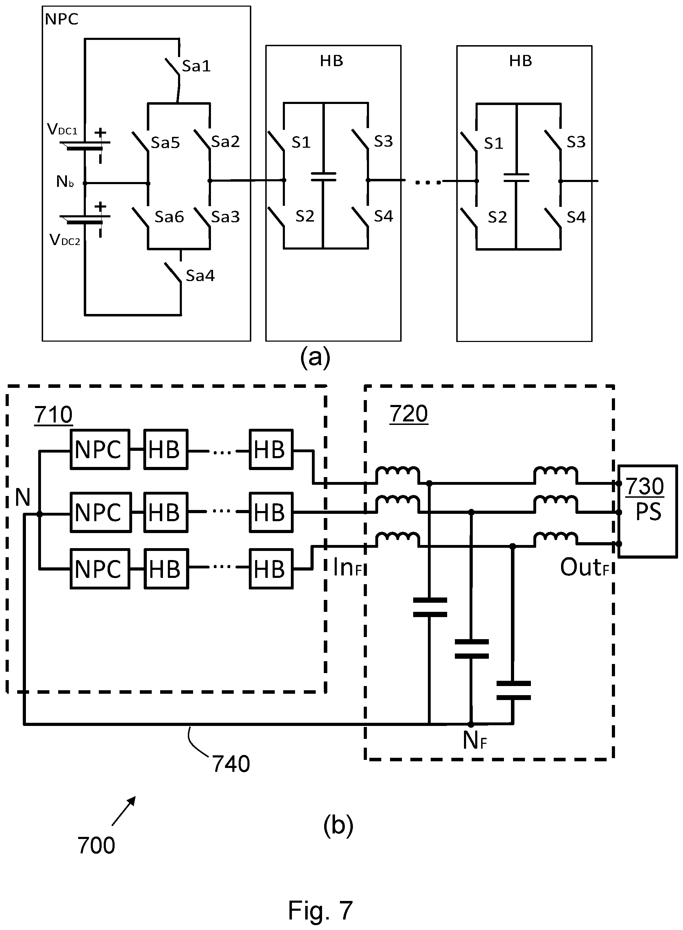

**Fig. 7(a)** shows an exemplary inverter with cascaded inverter submodules, where the first inverter submodule is an NPC inverter denoted by **NPC,** the rests of the inverter submodules are H-bridge inverters denoted by **HB.** Input of the NPC is connected to a midpoint **Nb** of DC bus, e.g. the midpoint of two batteries with a first DC voltage V_{DC1} and a second DC voltage V_{DC2}. **Fig. 7(b)** shows an exemplary power converter **700** with a common mode loop. The power converter 700 comprises a multiple phases inverter **710,** e.g. a 3-phase inverter. Each phase inverter is implemented by the inverter shown in Fig. 7(a). That is each phase inverter comprises an NPC inverter cascaded with one or more HB inverters. Inputs of the first inverter submodules NPC in each phase inverter are connected together to form a neutral terminal **N** of the multiple phases inverter 710, i.e. the midpoints **Nb** of DC bus in each phase inverter are connected together.

The power converter 700 further comprises a multiple phases filter **720,** e.g. a 3-phase filter, having a neutral terminal **N_{F}**. Output terminals of each phase inverter are connected to respective input terminals **In_{F}** of the multiple phases filter 720. Output terminals **OutF** of the multiple phases filter 720 are connected to a power system **730.** A common mode loop is formed in the power converter 700 by a connection **740** between the neutral terminal N_{F} of the multiple phases filter 720 and the neutral terminal N of the multiple phases inverter 710.

The common mode loop connections 340, 540, 740 may be implemented by a cable or an impedance component which is less bulky and expensive than transformers. Any one of the common mode loop connections 340, 540, 740 may be a cable or an impedance component connecting the neutral terminal N_{F} of the multiple phases filter 320, 520, 720 and the neutral terminal N of the multiple phases inverter 310, 510, 710 directly or via a switch.

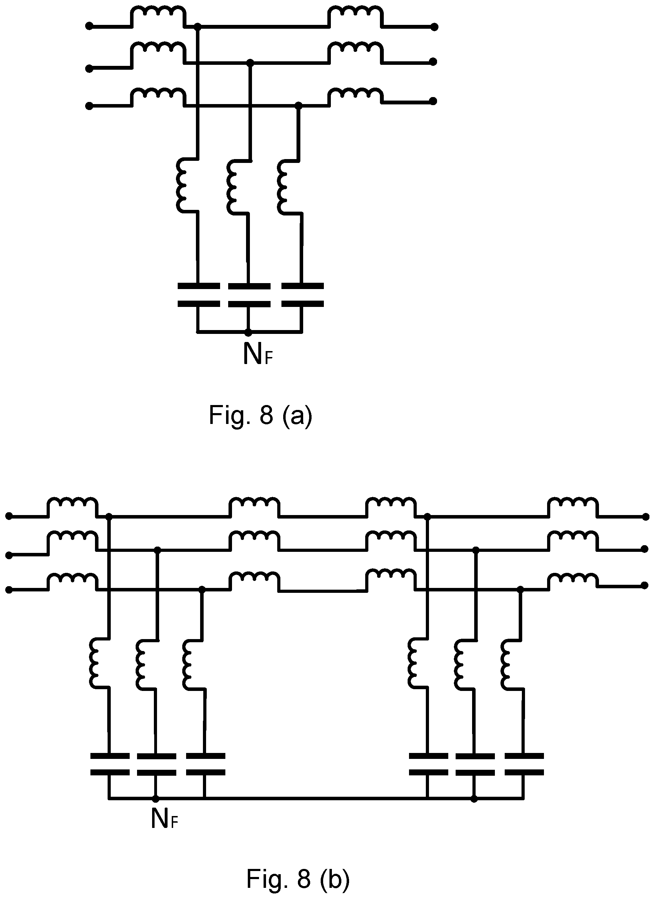

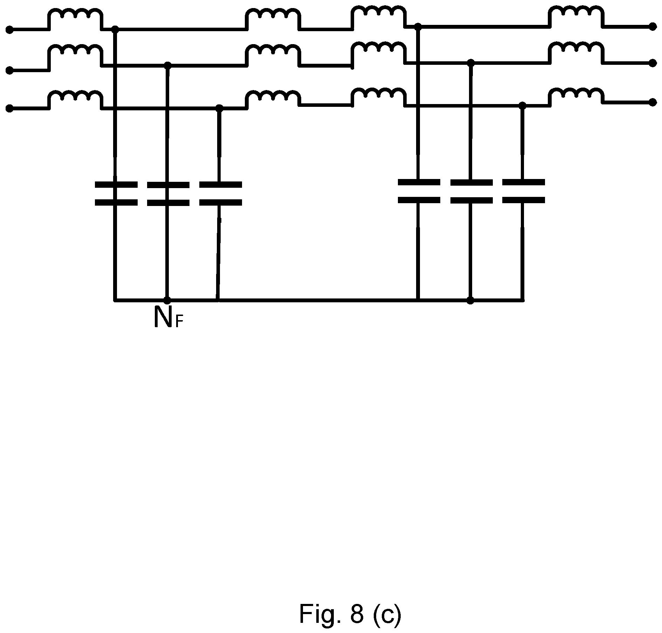

Figs. 3-7 are just exemplary power converters, wherein the multiple phases filter 320, 520, 720 shown as a multiple phases inductor-capacitor-inductor (LCL) filter. However, the multiple phases filter 320, 520, 720 may be any type of multiple phases filters. **Fig. 8** shows some exemplary multiple phases filters, where (a) is a multiple phases inductor-inductor-capacitor-inductor (LLCL) filter, (b) is a multiple phases cascaded LLCL filter, and (c) is a multiple phases cascaded LCL filter.

The common mode loop connections 340, 540, 740 may be implemented in any type of the power converters, such as Voltage Source Converters (VSCs), High Voltage Direct Current (HVDC) converters, DC/DC converters, DC/AC converters, AC/DC converters etc. The power converters 300, 500, 700 may be implemented in a renewable energy system, a motor drive system, a HVDC transmission system, or a battery energy storage system.

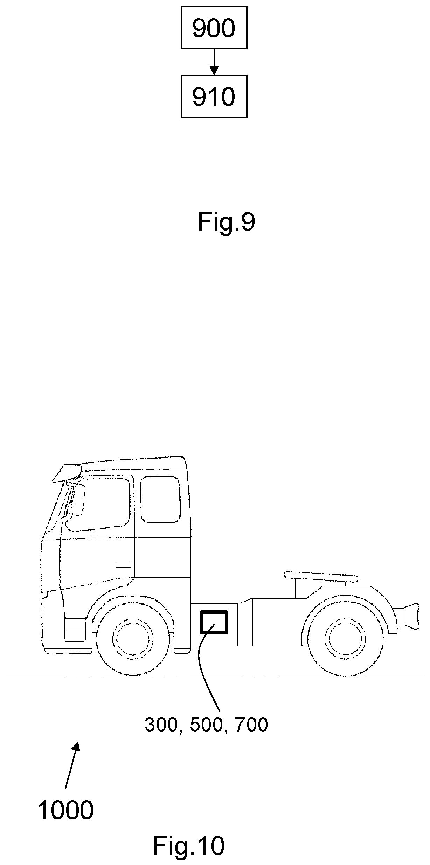

A method **900** for forming a common mode loop in the power converter 300, 500, 700 will be described with reference to **Fig.9****.** The method comprises forming **910** the common mode loop by providing a connection between the neutral terminal N_{F} of the multiple phases filter 320, 520, 720 and the neutral terminal N of the multiple phases inverter 310, 510, 710.

Any one of the connections 340, 540, 740 described above may be a cable or an impedance component connecting two terminals directly or via a switch.

The power converters 300, 500, 700 may be implemented in a motor drive system of a vehicle. **Fig.10** shows an exemplary vehicle **1000** in which the power converters 300, 500, 700 may be implemented. The vehicle 1000 comprises a power converter 300, 500, 700 with common mode loop as described above. The vehicle 1000 is a heavy-duty vehicle, such as truck, bus, and construction equipment, among other vehicle types. Although the disclosure may be described with respect to a particular vehicle, the disclosure is not restricted to any particular vehicle, but may be also used in other vehicles such as, trailers, wheel loaders, articulated haulers, excavators, backhoe loaders, passenger cars, marine vessels etc. It may also be applied in various industrial construction machines or working machines.

The vehicle 1000 may be a truck for towing one or more trailers (not shown). It shall however be understood that the vehicle may be any other type of vehicle, such as another type of truck, a bus, a passenger car, and construction equipment, such as an excavator, a wheel loader, etc. The vehicle 1000 may be operated by a user (not shown) and/or be at least partly automatically driven, i.e., it may be a vehicle comprising autonomous driving capabilities. The vehicle 1000 may be a fully electric vehicle or a hybrid vehicle or a vehicle driven only by a combustion engine. As such, the vehicle 1000 may comprise one or more electric motors/generators and/or an internal combustion engine for driving the vehicle 1000.

The term vehicle will be used herein when referring to any of the above types of vehicles.

**Some examples:**
Example 1. A power converter (300, 500, 700) comprises:
   a multiple phases inverter (310, 510, 710), wherein each phase inverter comprises a number n of inverter submodules (SM1, SM2, ... SMn) cascaded, and inputs of the first inverter submodules (SM1) in each phase inverter are connected together to form a neutral terminal (N) of the multiple phases inverter (310);
   a multiple phases filter (320, 520, 720) having a neutral terminal (N_{F}); wherein output terminals of each phase inverter are connected to respective input terminals (In_{F}) of the multiple phases filter (320, 520, 720);
   output terminals (OutF) of the multiple phases filter (320, 520, 720) are connected to a power system (330, 530, 730); and wherein
   a common mode loop is formed in the power converter (300, 500, 700) by a connection (340, 540, 740) between the neutral terminal (N_{F}) of the multiple phases filter (320, 520, 720) and the neutral terminal (N) of the multiple phases inverter (310, 510, 710).
Example 2. The power converter (300, 500, 700) according to Example 1, wherein the multiple phases inverter (310, 510, 710) is a 3-phase inverter and the multiple phases filter is a 3-phase filter.
Example 3. The power converter (300, 500, 700) according to any one of Examples 1-2, wherein the common mode loop connection (340, 540, 740) is implemented by a cable or an impedance component, and the cable or impedance component connects the neutral terminal (N_{F}) of the multiple phases filter (320, 520, 720) and the neutral terminal (N) of the multiple phases inverter (310, 510, 710) directly or via a switch.
Example 4. The power converter (300, 500, 700) according to any one of Examples 1-3, wherein the multiple phases filter (320, 520, 720) is any one of a multiple phases inductor-capacitor-inductor, LCL, filter, a multiple phases inductor-inductor-capacitor-inductor, LLCL, filter, a multiple phases cascaded LCL filter, or a multiple phases cascaded LLCL filter.
Example 5. The power converter arrangement (300, 500, 700) according to any one of Examples 1-4, wherein the number n of inverter submodules (SM1, SM2, ... SMn) are cascaded in single terminal connection (310) or in double-terminal connection (510), where n is a positive integer.
Example 6. The power converter (300, 500, 700) according to any one of Examples 1-5, wherein the number n of cascaded inverter submodules (SM1, SM2, ... SMn) comprise at least one or more of neutral point clamped, NPC, inverters (410), H-bridge (HB) inverters (420), double-H bridge inverters (610), semi-H bridge inverters (620).
Example 7. The power converter (300, 500, 700) according to any one of Examples 1-6, wherein the number n of cascaded inverter submodules (SM1, SM2, ... SMn) comprise at least one neutral point clamped, NPC, inverters (410) cascaded with at least one of: one or more H-bridge (HB) inverters (420), one or more semi-H bridge inverters (620), one or more double H-bridge inverters (610).
Example 8. The power converter (300, 500, 700) according to any one of Examples 1-6, wherein each of the number n of cascaded inverter submodules (SM1, SM2, ... SMn) is a neutral point clamped, NPC, inverter (410).
Example 9. The power converter (300, 500, 700) according to any one of Examples 1-6, wherein the first inverter submodule (SM1) in each phase inverter is a neutral point clamped, NPC, inverter (410), and at least one of the rests of inverter submodules is a H-bridge inverter (420), a semi-H bridge inverter (620), or a double-H bridge inverter (610).
Example 10. The power converter (300, 500, 700) according to any one of Examples 6-9, wherein the NPC inverter is at least one of a multi-level NPC inverter, an I-type NPC inverter, an active I-type NPC inverter, a T-type NPC inverter, an F-type NPC inverter, and a multilevel version of any one of I-type, active I-type, T-type, F-type NPC inverter.
Example 11. The power converter (300, 500, 700) according to any one of Examples 1-6, wherein each of the number n of cascaded inverter submodules (SM1, SM2, ... SMn) is a H-bridge inverter (420), or a semi-H bridge inverter (620), or a double H-bridge inverter (610).
Example 12. The power converter (300, 500, 700) according to any one of Examples 1-6, wherein the number n of cascaded inverter submodules (SM1, SM2, ... SMn) comprise at least one of semi-H bridge inverters (620) cascaded with one or more double H-bridge inverters (610).
Example 13. The power converter (300, 500, 700) according to any one of claims 1-6, wherein at least one of the number n of cascaded inverter submodules (SM1, SM2, ... SMn) is at least one of a neutral point clamped, NPC, inverter (410), an H-bridge (HB) inverter (420), a double-H bridge inverter (610), a semi-H bridge inverter (620).
Example 14. The power converter (300, 500, 700) according to any one of Examples 1-13, wherein the power converter is at least one of a Voltage Source Converter, VSC, a High Voltage Direct Current, HVDC, converter, a Direct Current to Direct Current, DCDC, converter, a Direct Current to Alternating Current, DCAC, converter, an Alternating Current to Direct Current, ACDC, converter.
Example 15. The power converter (300, 500, 700) according to any one of Examples 1-14, wherein the power converter is implemented in at least one of a renewable energy system, a motor drive system, a high-voltage direct current, HVDC, transmission system, a battery storage system.
Example 16. A vehicle (1000) comprises a power converter (300, 500, 700) according to any one of Examples 1-14.
Example 17. A method for forming a common mode loop in a power converter (300, 500, 700), wherein the power converter (300, 500, 700) comprises:
   a multiple phases inverter (310, 510, 710), wherein each phase inverter comprises a number n of inverter submodules (SM1, SM2, ... SMn) cascaded, and inputs of the first inverter submodules (SM1) in each phase inverter are connected together to form a neutral terminal (N) of the multiple phases inverter (310, 510, 710);
   a multiple phases filter (320, 520, 720) having a neutral terminal (NF); and wherein
   output terminals of each phase inverter are connected to respective input terminals (InF) of the multiple phases filter (320, 520, 720);
   output terminals (OutF) of multiple phases filter (320, 520, 720) are connected to a power system (330, 530, 730); and
   the method comprises:
      providing (910) a connection between the neutral terminal (NF) of the multiple phases filter (320, 520, 720) and the neutral terminal (N) of the multiple phases inverter (310, 510, 710).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A power converter (300, 500, 700) comprises:
a multiple phases inverter (310, 510, 710), wherein each phase inverter comprises a number n of inverter submodules (SM1, SM2, ... SMn) cascaded, and inputs of the first inverter submodules (SM1) in each phase inverter are connected together to form a neutral terminal (N) of the multiple phases inverter (310);
a multiple phases filter (320, 520, 720) having a neutral terminal (N_{F}); wherein
output terminals of each phase inverter are connected to respective input terminals (In_{F}) of the multiple phases filter (320, 520, 720);
output terminals (OutF) of the multiple phases filter (320, 520, 720) are connected to a power system (330, 530, 730); and wherein
a common mode loop is formed in the power converter (300, 500, 700) by a connection (340, 540, 740) between the neutral terminal (N_{F}) of the multiple phases filter (320, 520, 720) and the neutral terminal (N) of the multiple phases inverter (310, 510, 710).

2. The power converter (300, 500, 700) according to claim 1, wherein the multiple phases inverter (310, 510, 710) is a 3-phase inverter and the multiple phases filter is a 3-phase filter.

3. The power converter (300, 500, 700) according to any one of claims 1-2, wherein the common mode loop connection (340, 540, 740) is implemented by a cable or an impedance component, and the cable or impedance component connects the neutral terminal (N_{F}) of the multiple phases filter (320, 520, 720) and the neutral terminal (N) of the multiple phases inverter (310, 510, 710) directly or via a switch.

4. The power converter (300, 500, 700) according to any one of claims 1-3, wherein the multiple phases filter (320, 520, 720) is at least one of a multiple phases inductor-capacitor-inductor, LCL, filter, a multiple phases inductor-inductor-capacitor-inductor, LLCL, filter, a multiple phases cascaded LCL filter, or a multiple phases cascaded LLCL filter.

5. The power converter arrangement (300, 500, 700) according to any one of claims 1-4, wherein the number n of inverter submodules (SM1, SM2, ... SMn) are cascaded in single terminal connection (310) or in double-terminal connection (510).

6. The power converter (300, 500, 700) according to any one of claims 1-5, wherein the number n of cascaded inverter submodules (SM1, SM2, ... SMn) comprise at least one or more of neutral point clamped, NPC, inverters (410), H-bridge (HB) inverters (420), double-H bridge inverters (610), semi-H bridge inverters (620).

7. The power converter (300, 500, 700) according to any one of claims 1-6, wherein the number n of cascaded inverter submodules (SM1, SM2, ... SMn) comprise at least one or more neutral point clamped, NPC, inverters (410) cascaded with at least one of: one or more H-bridge (HB) inverters (420), one or more semi-H bridge inverters (620), one or more double H-bridge inverters (610).

8. The power converter (300, 500, 700) according to any one of claims 1-6, wherein each of the number n of cascaded inverter submodules (SM1, SM2, ... SMn) is a neutral point clamped, NPC, inverter (410).

9. The power converter (300, 500, 700) according to any one of claims 1-6, wherein the first inverter submodule (SM1) in each phase inverter is a neutral point clamped, NPC, inverter (410), and at least one of the rests of inverter submodules is a H-bridge inverter (420), a semi-H bridge inverter (620), or a double-H bridge inverter (610).

10. The power converter (300, 500, 700) according to any one of claims 6-9, wherein the NPC inverter is at least one of a multi-level NPC inverter, an I-type NPC inverter, an active I-type NPC inverter, a T-type NPC inverter, an F-type NPC inverter, and a multilevel version of any one of I-type, active I-type, T-type, F-type NPC inverter.

11. The power converter (300, 500, 700) according to any one of claims 1-6, wherein each of the number n of cascaded inverter submodules (SM1, SM2, ... SMn) is a H-bridge inverter (420), or a semi-H bridge inverter (620), or a double H-bridge inverter (610).

12. The power converter (300, 500, 700) according to any one of claims 1-6, wherein the number n of cascaded inverter submodules (SM1, SM2, ... SMn) comprise at least one semi-H bridge inverters (620) cascaded with at least one double H-bridge inverters (610).

13. The power converter (300, 500, 700) according to any one of claims 1-12, wherein the power converter is implemented in at least one of a renewable energy system, a motor drive system, a high-voltage direct current, HVDC, transmission system, a battery storage system.

14. A vehicle (1000) comprises a power converter (300, 500, 700) according to any one of claims 1-13.

15. A method for forming a common mode loop in a power converter (300, 500, 700), wherein the power converter (300, 500, 700) comprises:
a multiple phases inverter (310, 510, 710), wherein each phase inverter comprises a number n of inverter submodules (SM1, SM2, ... SMn) cascaded, and inputs of the first inverter submodules (SM1) in each phase inverter are connected together to form a neutral termina (N) of the multiple phases inverter (310, 510, 710);
a multiple phases filter (320, 520, 720) having a neutral terminal (NF); and wherein
output terminals of each phase inverter are connected to respective input terminals (InF) of the multiple phases filter (320, 520, 720);
output terminals (OutF) of multiple phases filter (320, 520, 720) are connected to a power system (330, 530, 730); and
the method comprises:
forming a common mode loop in the power converter (300, 500, 700) by providing (910) a connection between the neutral terminal (NF) of the multiple phases filter (320, 520, 720) and the neutral terminal (N) of the multiple phases inverter (310, 510, 710).

## Amended claims

### Amended claims in accordance with Rule 137(2) EPC.

1. A power converter (300, 500, 700) comprises:
a multiple phases inverter (310, 510, 710), wherein each phase inverter comprises a number n of inverter submodules (SM1, SM2, ...SMn) cascaded, and inputs of the first inverter submodules (SM1) in each phase inverter are connected together to form a neutral terminal (N) of the multiple phases inverter (310, 510, 710);
a battery pack, and wherein the neutral terminal (N) of the multiple phases inverter (310, 510, 710) is connected to a neutral terminal of the battery pack;
a multiple phases filter (320, 520, 720) having a neutral terminal (N_{F}); wherein
output terminals of each phase inverter are connected to respective input terminals (In_{F}) of the multiple phases filter (320, 520, 720);
output terminals (OutF) of the multiple phases filter (320, 520, 720) are configured for connection to a power system (330, 530, 730); and wherein
a common mode loop is formed in the power converter (300, 500, 700) by a connection (340, 540, 740) between the neutral terminal (N_{F}) of the multiple phases filter (320, 520, 720) and the neutral terminal (N) of the multiple phases inverter (310, 510, 710) and battery pack.

2. The power converter (300, 500, 700) according to claim 1, wherein the multiple phases inverter (310, 510, 710) is a 3-phase inverter and the multiple phases filter is a 3-phase filter.

3. The power converter (300, 500, 700) according to any one of claims 1-2, wherein the common mode loop connection (340, 540, 740) is implemented by a cable or an impedance component, and the cable or impedance component connects the neutral terminal (N_{F}) of the multiple phases filter (320, 520, 720) and the neutral terminal (N) of the multiple phases inverter (310, 510, 710) directly or via a switch.

4. The power converter (300, 500, 700) according to any one of claims 1-3, wherein the multiple phases filter (320, 520, 720) is at least one of a multiple phases inductor-capacitor-inductor, LCL, filter, a multiple phases inductor-inductor-capacitor-inductor, LLCL, filter, a multiple phases cascaded LCL filter, or a multiple phases cascaded LLCL filter.

5. The power converter arrangement (300, 500, 700) according to any one of claims 1-4, wherein the number n of inverter submodules (SM1, SM2, ...SMn) are cascaded in single terminal connection (310) or in double-terminal connection (510).

6. The power converter (300, 500, 700) according to any one of claims 1-5, wherein the number n of cascaded inverter submodules (SM1, SM2, ...SMn) comprise at least one or more of neutral point clamped, NPC, inverters (410), H-bridge (HB) inverters (420), double-H bridge inverters (610), semi-H bridge inverters (620).

7. The power converter (300, 500, 700) according to any one of claims 1-6, wherein the number n of cascaded inverter submodules (SM1, SM2, ...SMn) comprise at least one or more neutral point clamped, NPC, inverters (410) cascaded with at least one of: one or more H-bridge (HB) inverters (420), one or more semi-H bridge inverters (620), one or more double H-bridge inverters (610).

8. The power converter (300, 500, 700) according to any one of claims 1-6, wherein each of the number n of cascaded inverter submodules (SM1, SM2, ...SMn) is a neutral point clamped, NPC, inverter (410).

9. The power converter (300, 500, 700) according to any one of claims 1-6, wherein the first inverter submodule (SM1) in each phase inverter is a neutral point clamped, NPC, inverter (410), and at least one of the rests of inverter submodules is a H-bridge inverter (420), a semi-H bridge inverter (620), or a double-H bridge inverter (610).

10. The power converter (300, 500, 700) according to any one of claims 6-9, wherein the NPC inverter is at least one of a multi-level NPC inverter, an I-type NPC inverter, an active I-type NPC inverter, a T-type NPC inverter, an F-type NPC inverter, and a multilevel version of any one of I-type, active I-type, T-type, F-type NPC inverter.

11. The power converter (300, 500, 700) according to any one of claims 1-6, wherein each of the number n of cascaded inverter submodules (SM1, SM2, ...SMn) is a H-bridge inverter (420), or a semi-H bridge inverter (620), or a double H-bridge inverter (610).

12. The power converter (300, 500, 700) according to any one of claims 1-6, wherein the number n of cascaded inverter submodules (SM1, SM2, ...SMn) comprise at least one semi-H bridge inverters (620) cascaded with at least one double H-bridge inverters (610).

13. The power converter (300, 500, 700) according to any one of claims 1-12, wherein the power converter is implemented in at least one of a renewable energy system, a motor drive system, a high-voltage direct current, HVDC, transmission system, a battery storage system.

14. A vehicle (1000) comprises a power converter (300, 500, 700) according to any one of claims 1-13.

15. A method for forming a common mode loop in a power converter (300, 500, 700), wherein the power converter (300, 500, 700) comprises:
a multiple phases inverter (310, 510, 710), wherein each phase inverter comprises a number n of inverter submodules (SM1, SM2, ...SMn) cascaded, and inputs of the first inverter submodules (SM1) in each phase inverter are connected together to form a neutral termina (N) of the multiple phases inverter (310, 510, 710), and the neutral terminal (N) of the multiple phases inverter (310, 510, 710) is connected to a neutral terminal a battery pack;
a multiple phases filter (320, 520, 720) having a neutral terminal (NF); and wherein
output terminals of each phase inverter are connected to respective input terminals (InF) of the multiple phases filter (320, 520, 720);
output terminals (OutF) of multiple phases filter (320, 520, 720) are configured for connection to a power system (330, 530, 730); and
the method comprises:
forming a common mode loop in the power converter (300, 500, 700) by providing (910) a connection between the neutral terminal (NF) of the multiple phases filter (320, 520, 720) and the neutral terminal (N) of the multiple phases inverter (310, 510, 710) and battery pack.
